# EUROPÄISCHE PATENTANMELDUNG

(11) **EP 0 732 794 A1**
(43) Veröffentlichungstag der Anmeldung: **18.09.1996**
(21) Anmeldenummer: 96102833.9
(22) Anmeldetag: 26.02.1996
(51) Int. Cl.: H02K 5/128, F04D 13/06

(54) **Statorbefestigung für einen Spaltrohrmotor**

(30) Priorität: 14.03.1995 DE 19509134
(71) Anmelder: WILO GmbH, D-44263 Dortmund (DE)
(72) Erfinder: Kaul, Günter, 58456 Witten (DE)
(74) Vertreter: COHAUSZ HASE DAWIDOWICZ & PARTNER

(57) **Zusammenfassung**

Spaltrohrmotor 1, insbesondere für Heizungsumwälzpumpen, mit einem zwischen einem Rotor 8 und einem Stator 2 angeordneten Spaltrohr 3, insbesondere einem Spalttopf, das an einem Lagerschild 6 befestigt ist und auf das der Stator 2 auswechselbar aufschiebbar ist.

## Beschreibung

Die Erfindung betrifft einen Spaltrohrmotor, insbesondere für Heizungsumwälzpumpen, mit einem zwischen dem Rotor und dem Stator angeordneten Spaltrohr, insbesondere einem Spalttopf, das an einem Lagerschild befestigt ist und auf das der Stator auswechselbar aufgeschoben werden kann.

Eine Heizungsumwälzpumpe mit einem Spaltrohrmotor ist beispielsweise aus DE 27 51 516 A1 bekannt. Bei dieser Pumpe ist das Spaltrohr mit dem darin befindlichen Rotor fest am Pumpengehäuse montiert und der Stator auf das Spaltrohr von Hand auswechselbar aufschiebbar. Nach dem Aufschieben auf das Spaltrohr rastet der Stator in das als Montageplatte ausgebildete Lagerschild mittels eines vorhandenen Schnellverschlusses ein. Dieser einrastende Schnellverschluß ist beispielsweise als Bajonettringverschluß ausgebildet.

Einrastende Schnellverschlüsse haben den Nachteil, daß zwar die Montage des Stators auf dem Spaltrohr von einem Laien, die Demontage jedoch meist nur vom Fachmann durchgeführt werden kann, da das Abheben der Rastnasen aus den Einkerbungen die Zuhilfenahme eines Werkzeuges erfordert.

Eine ähnliche von einem Spaltrohrmotor betriebene Pumpe ist aus DE 41 22 487 C1 bekannt. Bei dieser Pumpe sind die einzelnen Teile, insbesondere das Lagerschild, das Pumpen- und das Motorgehäuse ebenfalls mit Bajonettverschlüssen zusammenfügbar. Durch die Bajonettverschlüsse ist die einfache Montage und Demontage der Teile gewährleistet, die u.U. von einem Laien durchgeführt werden kann.

Einrastende Schnellverschlüsse und Bajonettverschlüsse haben den Nachteil, daß sie sowohl in axialer als auch in tangentialer Richtung formschlüssig sind und daher sehr wenig Toleranz aufweisen, sodaß die mit den Verschlüssen verbundenen Bauteile untereinander kaum Spiel haben. Gerade bei der Verwendung eines Schnellverschlusses bei einem Pumpenaggregat ist ein gewisses Spiel ist jedoch unverzichtbar, da sich die aus verschiedenen Materialien gefertigten Bauteile im Förderbetrieb unterschiedlich erwärmen und ausdehnen. Ein formschlüssiger Verschluß kann leicht zum Verklemmen des Stators auf dem Spaltrohr und damit zu einer starken mechanischen Belastung der Bauteile führen.

Obwohl sich Bajonettverschlüsse relativ einfach schließen und wieder öffnen lassen, haben sie den weiteren Nachteil, daß das Anbringen der Verschlüsse an den Bauteilen ist konstruktiv aufwendig ist. Es bedarf beispielsweise eines federnden Elementes, um den sicheren Halt des Verschlusses zu gewährleisten.

Ein zusätzlicher Nachteil des Bajonettverschlusses ist, daß zwei Bewegungen, nämlich eine axiale und eine tangentiale, notwendig sind, um den Verschluß zu betätigen.

Aufgabe der Erfindung ist es daher, eine Möglichkeit zur Befestigung eines auf ein Spaltrohr aufschiebbaren Stators zu schaffen, die einfach und komfortabel von jedem Laien mit einem Handgriff geschlossen und wieder gelöst werden kann und die durch Temperaturunterschiede auftretende Verspannungen zwischen den Bauteilen durch die ihr eigenes Spiel ausgleicht.

Diese Aufgabe wird dadurch gelöst, daß der Stator mittels mindestens eines in axialer Richtung kraftschlüssigen und in Drehrichtung formschlüssigen Halteelementes am Lagerschild befestigbar ist.

Da die während des Betriebes auf den Stator wirkenden Kräfte sehr klein sind, ist es besonders vorteilhaft, das zweiteilige Halteelement als Druckknopf-, Klett- oder Adhaesionsverschluß auszubilden. Derartige Verschlußformen haben den Vorteil, daß sie sehr billig hergestellt werden können.

Eine so ausgeführte Statorbefestigungen hat nicht nur den Vorteil, daß sie für jedermann sehr mit einem Handgriff zu bedienen sind und mit ihrem großen Spiel unterschiedliche Ausdehnungen der Bauteile kompensieren, sie sind darüberhinaus nachträglich an jede Spaltrohrpumpe anbringbar.

Die Wartung oder Reparatur eines derarigen Pumpenaggregates mit einem aufschiebbaren und einfach zu befestigenden Stator ist aus den genannten Gründen für den Hauseigentümer sehr kostengünstig, da ein Austausch des Stators, der das anfälligste Bauteil derartiger Pumpenaggregate darstellt, von ihm selber ausgeführt werden kann.

Ein Ausführungsbeispiel der Erfindung ist in den Zeichnungen 1 und 2 dargestellt und wird im folgenden näher beschrieben.

Es zeigen:

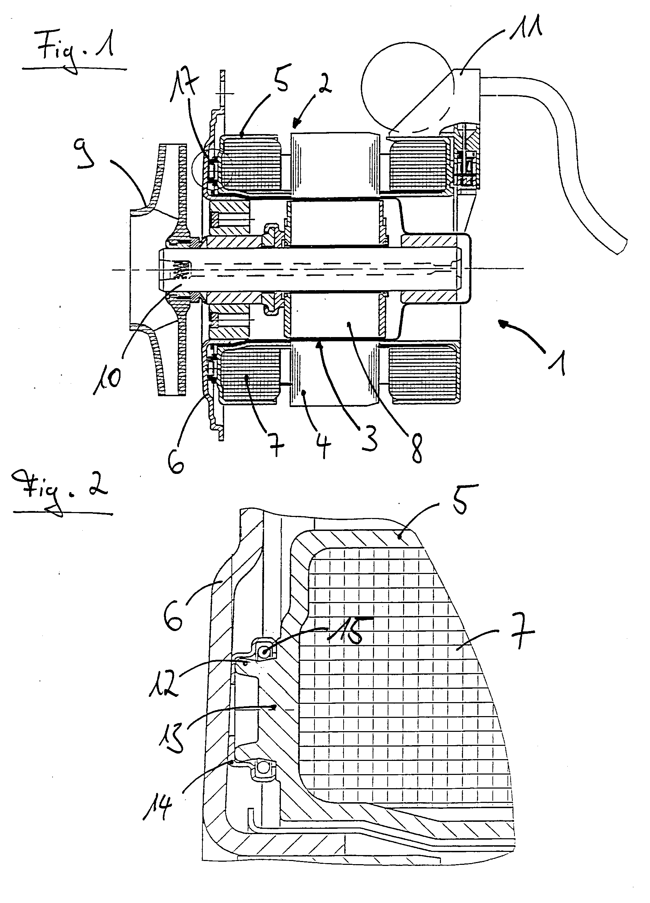

- Figur 1:: Einen Spaltrohrmotor und Pumpe mit Statorbefestigung.
- Figur 2:: Eine als Druckknopf ausgeführte Statorbefestigung.

Der Spaltrohrmotor 1 eines Heizungspumpenaggregates hat einen Stator 2, der abnehmbar auf den selbsttragenden Spalttopf 3 geschoben ist. Die Statorwicklungen 4 sind an den offenliegenden Wickelköpfen 7 zumindest teilweise mit einer Wickelkopfschutzkappe 5, die insbesondere aus Kunststoff gefertigt ist, umgeben. Der Spalttopf 3 schließt zum Fördermedium hin mit einem Lagerschild 6 ab.

In dem Spalttopf 3 befindet sich ein Rotor 8, der das Pumpenrad 9 über eine Welle 10 antreibt. Die elektrische Versorgung der Statorwicklungen 7 wird über das Netzkabel mit daran befindlichen Stecker 11 gewährleistet.

Der Stator 2 ist an dem Lagerschild 6 durch Halteelemente 17 befestigt. Die Halteelemente 17 weisen an der dem Pumpenrad 9 zugewandten Seite der Wickelkopfschutzkappe 5 Knöpfe 13 auf, die einen Haltering 12 haben. Mit diesem Haltering 12 greifen die Knöpfe 13 in ein Lager 14 das an dem Lagerschild 6 angebracht insbesondere angeschweißt ist. Das Lager weist ein Federelement 15 auf, das den kraftschlüssigen Halt des Stators 2 in axialer Richtung bewirkt.

Halteelemente 17 mit der beschriebenen druckknopfähnlichen Bauart haben den Vorteil, daß zwischen dem Haltering 12 und dem Lager 14 eine relativ große Toleranz von mehreren 10tel Milimetern vorgesehen werden kann. Da der Halt im Wesentlichen durch das Federelement 15 verursacht wird, büßen die Druckknöfe trotz großer Toleranz nicht von ihrer Haltekraft ein.

Da der Stator 2 durch das Spaltrohr 3 geführt ist, werden keine radialen Kräfte auf die Halteelemente 17 ausübt. Die Halteelemente 17 können daher von sehr leichter Bauweise sein, zumal die tangentialen und axialen Kräfte auf den Stator 2 sehr gering sind, wenn überhaupt welche auftreten. Aus diesem Grunde ist es möglich, neben den Druckknöpfen auch Klett- oder Adhäsionsverschlüsse als Halteelemente zu verwenden.

Aus Gründen einfacher Montage ist es besonders vorteilhaft, eine symmetrische Verteilung der Halteelemente 17 um das Spaltrohr herum vorzusehen. Dadurch wird eine einfache Montage des Stators 2 sichergestellt.

Da die Wickelkopfschutzkappe 3 vorteilhafterweise aus Kunststoff ist, lassen sich die Knöpfe einfach an die Stirnseite anformen oder ankleben. Das Lager 14 kann in solchen Fällen ebenfalls aus Kunststoff oder aber aus Metall gefertigt werden.

## Patentansprüche

1. Spaltrohrmotor (1), insbesondere für Heizungsumwälzpumpen, mit einem zwischen einem Rotor (8) und einem Stator (2) angeordneten Spaltrohr (3), insbesondere einem Spalttopf, das an einem Lagerschild (6) befestigt ist und auf das der Stator (2) auswechselbar aufschiebbar ist,
**dadurch gekennzeichnet**, daß der Stator (2) mittels mindestens eines in axialer Richtung kraftschlüssigen und in Drehrichtung formschlüssigen Halteelementes (17) am Lagerschild (6) befestigbar ist.

2. Spaltrohrmotor nach Anspruch 1,
**dadurch gekennzeichnet**, daß das Halteelement (17) in Drehrichtung ein Spiel aufweist.

3. Spaltrohrmotor nach Anspruch 1 oder 2,
**dadurch gekennzeichnet**, daß das Halteelement (17) in axialer Richtung ein Spiel aufweist.

4. Spaltrohrmotor nach einem der genannten Ansprüche,
**dadurch gekennzeichnet**, daß das Halteelement (17) ein am Lagerschild (6) und ein an der die Wickelköpfe (7) umgebende Wickelkopfschutzkappe (5) anbringgbares Teil aufweist.

5. Spaltrohrmotor nach einem der genannten Ansprüche,
**dadurch gekennzeichnet**, daß zumindest das am Lagerschild (6) befestigte Teil des Halteelementes (17) nachträglich anbringbar ist.

6. Spaltrohrmotor nach einem der genannten Ansprüche,
**dadurch gekennzeichnet**, daß das Halteelement (17) ein Druckknopf-, Klett- oder Adhäsionsverschluß ist.

7. Spaltrohrmotor nach einem der genannten Ansprüche,
**dadurch gekennzeichnet**, daß zwischen dem Stator (2) und dem Lagerschild (6) mehrere Halteelemente (17) in symmetrischer Teilung angebracht sind.
